# NOUVEAU FASCICULE DE BREVET EUROPEEN

(11) **EP 3 787 870 B2**
(45) Date de publication et mention de la décision concernant l'opposition: **08.01.2025**
(45) Mention de la délivrance du brevet: 16.03.2022
(21) Numéro de dépôt: 19728725.3
(22) Date de dépôt: 30.04.2019
(51) Int. Cl.: B29C 49/12, B29C 49/78, B29C 49/08, B29C 49/06, B29C 49/36, B29C 49/42, B29C 49/58, B29K 67/00, B29L 31/00

(54) **PROCÉDÉ DE FORMAGE DE RÉCIPIENT EN MATÉRIAU THERMOPLASTIQUE PAR ÉTIRAGE BI-AXIAL**
VERFAHREN ZUR HERSTELLUNG EINES BEHÄLTERS AUS THERMOPLASTISCHEM MATERIAL DURCH BIAXIALE STRECKUNG
METHOD FOR FORMING A CONTAINER MADE OF THERMOPLASTIC MATERIAL BY BIAXIAL STRETCHING

(30) Priorité: 02.05.2018 FR 1853771
(43) Date de publication de la demande: 10.03.2021
(73) Titulaire: Sidel Participations, 76930 Octeville-sur-Mer (FR)
(72) Inventeur: LECOMTE, Frederic, 76930 Octeville-sur-mer (FR); LANGLOIS, Pierre-François, 76930 Octeville-sur-mer (FR)
(74) Mandataire: Sidel Group
(86) Numéro de dépôt international: PCT/FR2019/051003
(87) Numéro de publication internationale: WO 2019/211557

(56) Documents cités:
- EP-A1- 0 795 580
- EP-A1- 0 796 890
- EP-A1- 1 314 535
- WO-A1-02/02864
- WO-A1-2008/023075
- WO-A1-2008/054614
- DE-A1- 102011 015 666
- US-A- 4 009 310
- US-A- 4 904 736
- US-A- 5 409 750
- US-A1- 2009 318 594
- US-A1- 2014 203 481
- US-A1- 2014 346 707
- US-B1- 6 274 662
- US-B1- 6 359 076
- T. Whelan, POLYMER TECHNOLOGY DICTIONARY, Chapman & Hall. 1994, pages 13-14 XP NUMBER: SOURCE:
- R.B. Simpson, RUBBER BASICS, Rapra Technologies Ltd.. 2002, pages 94-95XP NUMBER: SOURCE: ()
- Standard Practice for Rubber and Rubber Latices - Nomenclature, ASTM, Designation D1418 - 17, 2019XP NUMBER: SOURCE: ()
- Gooch Jan W.: Encyclopedic Dictionary of Polymers, 2nd Edition, Springer Verlag, 2011, Page 15XP NUMBER: SOURCE: ()

## Description

### DOMAINE TECHNIQUE DE L'INVENTION

L'invention concerne un procédé de formage d'un récipient par étirage-soufflage d'une préforme, la préforme axisymétrique présentant un corps tubulaire ouvert vers le haut par un col d'axe vertical et fermé vers le bas par un fond, le corps de la préforme étant préalablement rendu malléable par chauffage, le procédé comportant :
- une étape d'étirage au cours de laquelle une extrémité libre d'une tige d'étirage est insérée coaxialement dans le corps de la préforme par son col jusqu'au fond de la préforme pour étirer axialement le corps de la préforme ;
- une étape de formage au cours de laquelle un fluide de soufflage comprimé est injecté à une pression de formage dans la préforme.

### ARRIERE PLAN TECHNIQUE DE L'INVENTION

Il est connu de réaliser les récipients en matériau thermoplastique, tel que le polyéthylène téréphtalate (PET), par un procédé de formage de préformes. Les documents EP1314535A1 et US2014/203481A1 sont représentatifs de l'art antérieur.

En général, une préforme présente une forme axisymétrique. La préforme comporte un col qui présente déjà sa forme définitive, tandis qu'un corps de la préforme est destiné à être déformé pendant le procédé de formage. L'axe principal de la préforme passe par le centre du col. Le fond de la préforme présente généralement une paroi de forme hémisphérique centrée sur l'axe principal de la préforme.

Pour permettre sa déformation, le corps de la préforme est chauffé au-delà d'une température de transition vitreuse permettant de rendre la paroi du corps malléable en réduisant sensiblement sa limite d'élasticité. Au contraire, le col est maintenu à une température inférieure à la température de transition vitreuse pour éviter sa déformation.

Afin de réaliser des récipients présentant une paroi d'épaisseur sensiblement constante, il est connu de réaliser un étirage dit "bi-axial" de la matière constituant la paroi de la préforme pour la déformer plastiquement. Le procédé de formage comporte à cette effet une première étape d'étirage durant laquelle une tige d'étirage coulissante est introduite coaxialement dans le col de la préforme jusqu'à ce qu'une extrémité libre de la tige d'étirage atteigne le fond de la préforme. Puis, la tige d'étirage poursuit son coulissement en poussant le fond de la préforme de manière à étirer la paroi du corps dans une direction axiale. Vers la fin de cette étape d'étirage, un fluide de formage comprimé est injecté dans le corps de la préforme de manière à permettre un étirage de la matière dans une direction globalement circonférentielle de la paroi du corps de la préforme pour "gonfler" la préforme jusqu'à ce qu'elle atteigne sa forme définitive.

En général, ce procédé de formage est réalisé dans un moule qui comporte une empreinte conforme au récipient final à obtenir. La paroi du corps de la préforme est plaquée contre la paroi de l'empreinte sous l'effet de la pression du fluide de formage pour conférer au récipient sa forme définitive.

Par ailleurs, les préformes sont généralement obtenues par injection d'un matériau thermoplastique. Puis, elles sont refroidies et stockées en vue de leur transformation ultérieure en récipients finaux lors du procédé de formage.

Le refroidissement du matériau thermoplastique est maîtrisé de manière à ce que le matériau constituant la préforme soit dans un état "amorphe". Cet état permet de ramollir le matériau par chauffage jusqu'à la température de transition vitreuse.

L'injection du matériau thermoplastique est réalisé par le fond de la préforme, à un point qui est agencé sur l'axe principal de la préforme. Du fait de ce procédé de réalisation, le fond de la préforme présente un point d'injection qui est constitué du matériau thermoplastique dans un état peu étirable, même lorsqu'il est chauffé. En outre, ce point d'injection présente généralement un aspect rugueux, s'étendant parfois en saillie par rapport à la face externe du fond.

Du fait de ses caractéristiques, le point d'étirage demeure visible sur la face externe du récipient final. Cela confère un aspect inesthétique au récipient final.

De plus, le point d'injection constitue une zone de fragilité dans la paroi du récipient final. Le matériau constituant le point d'injection ne s'étirant sensiblement pas, il est en effet susceptible de se former une accumulation de contraintes d'étirage au voisinage de ce point d'injection en fin de formage.

En outre, l'aspect en saillie du point d'injection par rapport au fond du récipient est susceptible de faire vaciller le récipient lorsqu'il est posé sur un support plan.

Pour réduire ces inconvénients, il est connu de conférer au fond du récipient final une petite poche concave, c'est-à-dire rentrant vers l'intérieur du récipient, au fond de laquelle le point d'injection est agencé. A cet effet, la poche est centrée sur l'axe principal du récipient. En conséquence, dans le moule, l'empreinte de la poche est agencée dans l'axe de la tige d'étirage.

Pour que le point d'injection soit agencé correctement dans la poche du récipient final, cela suppose que le point d'injection soit sensiblement situé sur l'axe principal de la préforme lors du procédé de formage.

Pour la production de récipients en grande série, il est connu de réaliser l'opération de formage dans des dispositifs de formage agencées en périphérie d'un carrousel tournant. En général, l'axe de rotation du carrousel et les axes principaux des préformes sont verticaux. Lorsque le carrousel tourne, une force centrifuge radiale s'exerce donc sur le corps des préformes. Or, le corps des préformes étant alors malléable, la force centrifuge est suffisante pour faire fléchir légèrement le corps de la préforme de manière que le point d'injection se retrouve désaxé par rapport à l'axe principal de la préforme. Il s'ensuit que si ce désaxage n'est pas rattrapé, le point d'injection risque de ne plus être agencé dans la poche prévue à cet effet, entraînant les inconvénients susmentionnés.

Ce désaxage peut être rattrapé lors de l'étape d'étirage car l'extrémité libre de la tige d'étirage présente une forme hémisphérique qui permet de réaligner le point d'injection avec l'axe de la préforme par glissement du fond de la préforme par rapport à la tige. Néanmoins, au bout de plusieurs cycles d'utilisation, la tige d'étirage accumule de la chaleur et son extrémité libre devient assez chaude pour adhérer au fond de la préforme, ne permettant plus de réaliser la fonction de réalignement du point d'injection par rapport à l'axe principal de la préforme.

Pour résoudre ce problème, on a déjà proposé de réduire le désaxage du point d'injection en inclinant l'axe des préformes par rapport à l'axe de rotation du carrousel de manière que le fond de la préforme soit décalé radialement vers l'extérieur du carrousel par rapport au col de la préforme. L'angle entre l'axe de la préforme et l'axe du carrousel est prévu de manière que le poids du corps de la préforme additionné vectoriellement à la force centrifuge forme une force dirigée dans l'axe de la préforme, vers le fond de la préforme.

Cependant, une telle installation est très onéreuse à fabriquer car les dispositifs de formage doivent être inclinés d'un angle précis par rapport au plan du carrousel.

En outre, le poids et la force centrifuge dépendent de nombreux facteurs, tels que la vitesse de rotation du carrousel, le poids de la préforme ou encore la forme de la préforme. De ce fait, le point d'injection ne peut pas être réaligné précisément par rapport à l'axe de la préforme dans de nombreux cas. Ainsi, le point d'injection demeure susceptible d'être désaxé sous l'effet de la gravité et/ou de la force centrifuge.

### BREF RESUME DE L'INVENTION

L'invention propose un procédé de formage d'un récipient par étirage-soufflage d'une préforme, la préforme axisymétrique présentant un corps tubulaire ouvert vers le haut par un col d'axe vertical et fermé vers le bas par un fond, le corps de la préforme étant préalablement rendu malléable par chauffage, le procédé comportant :
- une étape d'étirage au cours de laquelle une extrémité libre d'une tige d'étirage est insérée coaxialement dans le corps de la préforme par son col jusqu'au fond de la préforme pour étirer axialement le corps de la préforme ;
- une étape de formage au cours de laquelle un fluide de soufflage comprimé est injecté à une pression de formage dans la préforme ;
caractérisé en ce qu'il comporte une étape de centrage du fond de la préforme qui est déclenchée avant que l'extrémité libre de la tige d'étirage ne soit en contact avec le fond de la préforme et au cours de laquelle un fluide de formage comprimé à une pression de rigidification est injecté dans la préforme pour centrer le fond de la préforme par rapport à l'axe "X1" du col, la pression de rigidification étant maintenue au moins jusqu'à ce que l'extrémité libre de la tige d'étirage soit en contact avec le fond de la préforme.

Selon d'autres caractéristiques du procédé réalisé selon les enseignements de l'invention :
- la pression de rigidification est comprise entre 1,01 bar et 2 bar, de préférence entre 1,05 bar et 1,5 bar ;
- au cours du procédé de formage, le col de la préforme est maintenu fixe par rapport à une face d'appui ;
- la préforme est soumise à une force extérieure de flexion qui tend à faire fléchir le corps en éloignant radialement le fond de l'axe du col, la pression de rigidification augmentant la raideur en flexion du corps de la préforme afin que le fond reste sensiblement centré axialement par rapport à l'axe du col ;
- le moule est monté en périphérie d'un carrousel tournant autour d'un axe, la force de flexion étant formé par une force centrifuge qui s'exerce sur le corps de la préforme lors de la rotation du carrousel ;
- la préforme est agencée sur le carrousel de manière que l'axe de son col soit sensiblement parallèle à l'axe de rotation du carrousel ;
- au cours de l'étape de soufflage la pression de formage est susceptible de varier entre une pression de présoufflage et une pression de soufflage supérieure à la pression de présoufflage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de côté qui représente une préforme destinée à être transformée en récipient par application du procédé réalisé selon les enseignements de l'invention ;
- la figure 2 est une vue en coupe axiale qui représente un dispositif de moulage, non revendiqué, dans lequel est logée la préforme de la figure 1 et qui est apte à mettre en œuvre le procédé réalisé selon les enseignements de l'invention ;
- la figure 3 est une vue similaire à celle de la figure 2 qui représente le dispositif de formage, non revendiqué, dans lequel la préforme soumise à une force extérieure de flexion ;
- la figure 4 est une vue de dessus qui représente un carrousel portant à sa périphérie des dispositifs de formage, non revendiqués, identiques à ceux des figures 2 et 3 ;
- la figure 5 est un schéma-bloc qui représente le procédé réalisé selon les enseignements de l'invention ;
- la figure 6 est une vue en coupe axiale qui représente schématiquement un premier mode de réalisation du dispositif de formage, non revendiqué, destiné à mettre en œuvre le procédé réalisé selon les enseignements de l'invention ;
- la figure 7 est une vue similaire à celle de la figure 6 qui représente un deuxième mode de réalisation du dispositif de formage, non revendiqué, destiné à mettre en œuvre le procédé réalisé selon les enseignements de l'invention ;
- la figure 8 est une vue similaire à celle de la figure 6 qui représente un troisième mode de réalisation du dispositif de formage, non revendiqué, destiné à mettre en œuvre le procédé réalisé selon les enseignements de l'invention ;
- la figure 9 est une vue similaire à celle de la figure 7 qui représente un quatrième mode de réalisation du dispositif de formage, non revendiqué, destiné à mettre en œuvre le procédé réalisé selon les enseignements de l'invention.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif une orientation axiale qui est indiquée par la flèche "A" des figures et qui est parallèle à l'axe "X1" du col 12 de la préforme 10. On définit des directions radiales rayonnant orthogonalement dans toutes les directions par rapport à l'axe "X1" du col 12 de la préforme 10 et enfin des directions circonférentielles qui s'étendent orthogonalement aux directions axiale et radiales.

Dans la suite de la description, les termes "amont" et "aval" seront utilisés en référence au sens d'écoulement du fluide de formage.

Dans la suite de la description, les pressions sont indiquées en valeur absolue en considérant que l'atmosphère ambiante dans laquelle se trouve la préforme 10 présente une pression de 1 bar.

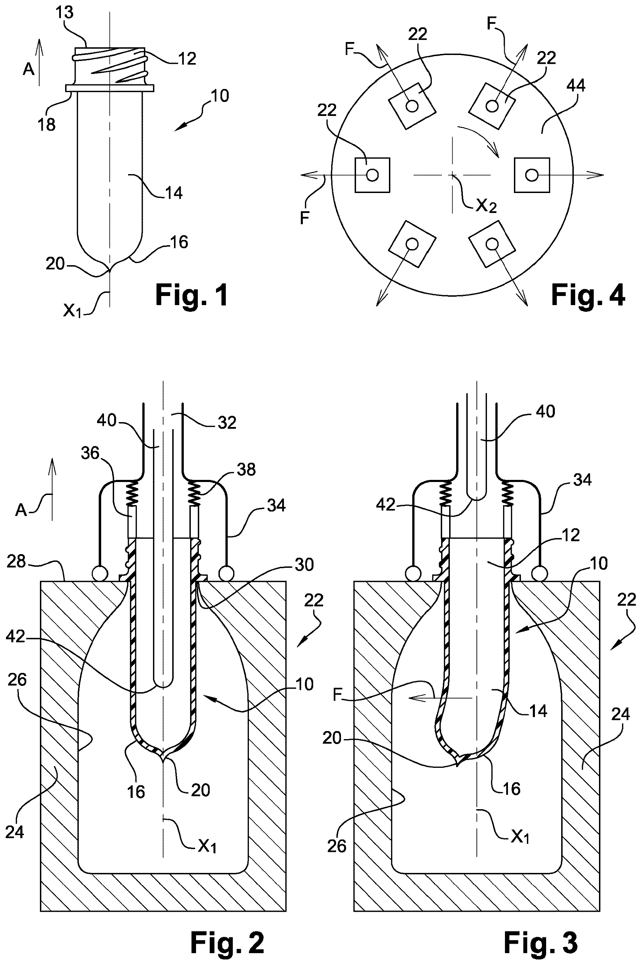

On a représenté à la figure 1 une préforme 10 réalisée en un matériau thermoplastique tel que du polyéthylène téréphtalate, plus connu sous son acronyme "PET". La préforme 10 est par exemple obtenue par moulage par injection. La préforme 10 est destinée à être transformée en un récipient final (non représenté) au cours d'un procédé de formage qui sera décrit en détail par la suite.

La préforme 10 présente une forme générale axisymétrique d'axe "X1" rectiligne. La préforme 10 comporte un col 12 supérieur présente une forme cylindrique tubulaire d'axe "X1". Le col 12 étant destiné à conserver sa forme durant le procédé de formage, par la suite l'axe "X1" principale de la préforme 10 est défini par rapport au col 12. Le col 12 est délimité axialement vers le haut par un bord libre annulaire appelé buvant 13.

Le col 12 débouche axialement vers le bas dans un corps 14 qui présente une paroi cylindrique tubulaire dont l'axe est normalement coaxial à l'axe "X1" principal vertical. Le corps 14 est fermé axialement vers le bas par un fond 16 de forme générale hémisphérique.

Le col 12 est déjà moulé à sa forme définitive. Il est pourvu sur sa face externe de moyens de fixation d'un bouchon, tel qu'un filetage ou une rainure. Une collerette 18 saillante radialement marque la séparation entre le corps 14 et le col 12. Par la suite, on considérera que la collerette 18 fait partie du col 12.

A la fin de leur moulage par injection, les préformes 10 sont refroidies brutalement, par exemple par trempe, pour conférer au matériau thermoplastique un état amorphe. Il est ainsi possible de rendre le matériau thermoplastique à nouveau malléable par chauffage au-delà d'une température de transition vitreuse. Le terme "malléable" signifie que la limite d'élasticité du matériau ainsi chauffé est très sensiblement inférieure à la limite d'élasticité dudit matériau présentant une température inférieure à la température de transition vitreuse.

Le fond 16 de la préforme 10 présente, au niveau de son intersection avec l'axe "X1" du col 12 de la préforme 10, un point 20 d'injection, correspondant au point d'injection du matériau thermoplastique pendant son moulage par injection. Les techniques de moulage par injection ne permettent pas d'obtenir un état parfaitement amorphe pour le matériau thermoplastique situé au point 20 d'injection et à son voisinage. Le matériau thermoplastique constituant le point 20 d'injection et son voisinage est ainsi dans un état semi-cristallin.

On a représenté à la figure 2 un dispositif 22 de formage, non revendiqué en tant que tel, destiné à transformer la préforme 10 en récipient final par formage.

Le dispositif 22 de formage comporte généralement un moule 24 présentant une cavité interne formant une empreinte 26 du récipient final à obtenir. Le moule 24 est délimité vers le haut par une face 28 d'appui radiale. L'empreinte 26 débouche axialement vers le haut par un orifice 30 débouchant dans la face 28 d'appui.

Le corps 14 et le fond 16 de la préforme 10 sont destinés à être reçus dans la cavité tandis que le col 12 de la préforme 10 sort de la cavité par l'orifice 30, en saillie axialement au-dessus de la face 28 d'appui. La préforme 10 est généralement maintenue dans cette position par appui de sa collerette 18 sur la face 28 d'appui, sur le pourtour de l'orifice 30.

Le dispositif 22 de formage comporte en outre une tuyère 32 qui est susceptible d'être alimentée en fluide de formage sous pressions et dont une extrémité inférieure libre est destinée à être raccordée au col 12 de la préforme 10. La tuyère 32 est généralement montée mobile entre une position d'usage dans laquelle elle est raccordée au col 12 de la préforme pour permettre d'injecter un fluide de formage sous pression dans la préforme 10, et une position rétractée au-dessus du moule 24 dans laquelle la tuyère 32 est écartée, généralement axialement, du moule 24 pour permettre l'extraction d'un récipient fini ou l'introduction d'une nouvelle préforme 10.

Dans l'exemple représenté aux figures, la tuyère 32 est destinée à être raccordée au col 12 au moyen d'une cloche 34 d'extrémité qui coiffe le col 12 de la préforme lorsque la tuyère occupe sa position d'usage. Un bord annulaire d'extrémité inférieur de la cloche 34 est appuyé de manière étanche contre la face 28 d'appui, ou parfois sur la collerette 18, pour permettre l'injection de fluide de formage dans la préforme 10 sans endommager le col 12.

Pour permettre de maintenir fermement le col 12 de la préforme 10 en position durant le procédé de formage, la tuyère 32 comporte une cale 36 annulaire, aussi appelée stabilisateur, qui est montée coulissante axialement à l'intérieur de la cloche 34 entre une position haute et une position basse vers laquelle elle est rappelée élastiquement par un organe 38 élastique intercalé axialement entre la cale 36 et la cloche 34. Ainsi, lorsque la cloche 34 est abaissée depuis sa position rétractée vers sa position d'usage, la cale 36 vient en contact avec le buvant 13 de la préforme 10 avant que la tuyère 32 n'ait atteint sa position d'usage. Tandis que la tuyère 32 poursuit son coulissement vers sa position d'usage, le buvant 13 bloque le déplacement de la cale 36 qui comprime en retour l'organe 38 élastique. De cette manière, lorsque la tuyère 32 est dans sa position d'usage, la collerette 18 de la préforme 10 est plaquée fermement contre la face 28 d'appui du moule 24. Ceci empêche ainsi la préforme 10 de se balancer radialement autour de sa collerette. L'axe principal "X1" du col 12 ainsi maintenu fixe par rapport à la face 28 d'appui pendant le procédé de formage.

Le dispositif 22 de formage comporte en outre une tige 40 d'étirage d'axe principal coaxial à l'axe "X1" du col 12 lorsque la préforme 10 est logée dans la cavité du moule 24. Plus généralement, la tige 40 d'étirage est agencée coaxialement à l'axe central de l'orifice 30 du moule 24. La tige 40 d'étirage comporte une extrémité 42 inférieure libre. La tige 40 d'étirage est montée coulissante axialement dans la tuyère 32 entre une position escamotée dans laquelle son extrémité 42 inférieure est agencée axialement au-dessus du col 12 à l'extérieur de la préforme 10, et une position d'étirage extrême inférieure dans laquelle l'extrémité 42 inférieure est insérée dans la préforme 10 par le col 12 pour venir pousser le fond 16 de la préforme 10 axialement à proximité du fond de l'empreinte 26.

Pendant une première partie de sa course de coulissement l'extrémité 42 libre de la tige d'étirage est ainsi située à l'intérieur de la préforme 10 sans être en contact avec le fond 16 de la préforme 10, puis pendant une deuxième partie de sa course de coulissement, la tige 40 d'étirage pousse effectivement le fond 16 de la préforme 10 vers le fond de l'empreinte 26 pour déformer plastiquement la paroi malléable de la préforme 10 par étirage axial, comme cela sera expliqué plus en détails par la suite. A la figure 2, la tige 40 coulissante est montrée dans une position intermédiaire entre sa position escamotée et sa position d'étirage extrême pendant la première partie de sa course.

Préalablement à son introduction dans le moule 24, le corps 14 de la préforme 10 est rendu malléable par chauffage ou par maintien de sa température au-delà d'une température de transition vitreuse. Par ailleurs, le col 12 présentant déjà sa forme définitive est maintenu à une température inférieure à sa température de transition vitreuse de manière à demeurer très sensiblement plus rigide que le corps 14.

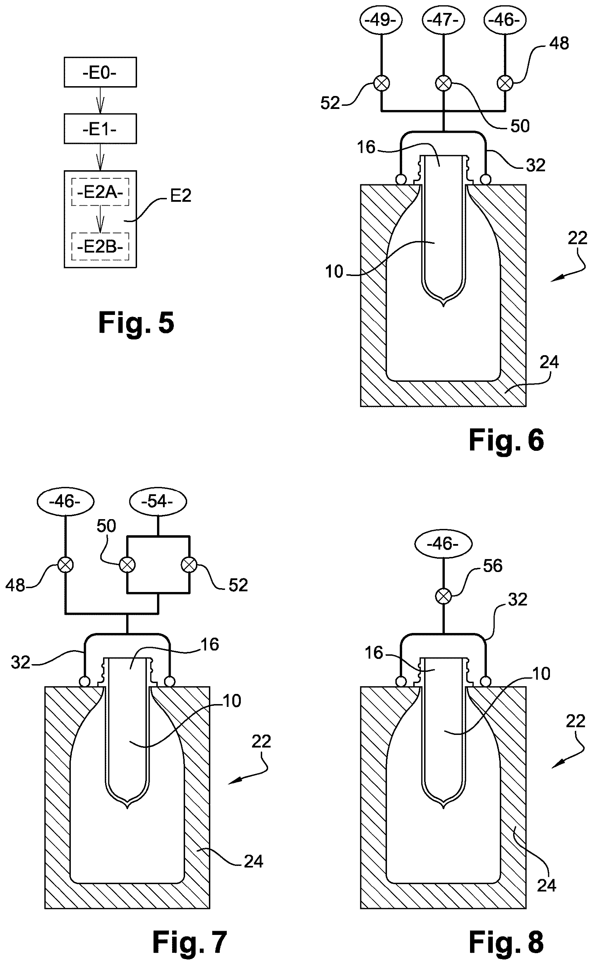

Comme cela est illustré à la figure 5, le procédé de formage par étirage bi-axial comporte généralement une première étape "E1" d'étirage au cours de laquelle l'extrémité 42 libre de la tige 40 d'étirage est insérée coaxialement à l'axe "X1" dans le corps 14 de la préforme 10 par son col 12 jusqu'au fond 16 de la préforme 10. La tige 40 d'étirage applique un effort axial vers le bas contre le fond 16 de la préforme 10 pour déformer plastiquement le corps 14 de la préforme 10 par étirage axialement.

Puis, au cours d'une deuxième étape "E2" de soufflage, qui démarre après le début de la première étape "E1" d'étirage, un fluide de formage comprimé est injecté à une pression "P2" de formage déterminée dans la préforme 10 pour étirer le corps de la préforme 10 principalement circonférentiellement.

De manière non limitative, au cours de l'étape de soufflage la pression "P2" de formage est susceptible de varier entre une pression "P2A" de présoufflage et une pression "P2B" de soufflage supérieure à la pression "P2A" de présoufflage. La pression "P2A" de présoufflage est par exemple comprise entre 2 et 5 bars, tandis que la pression "P2B" de soufflage est par exemple comprise entre 14 bars et 40 bars.

La deuxième étape "E2" est par exemple décomposée en une phase "E2A" de présoufflage, au cours laquelle le fluide de formage est injecté à la pression "P2A" de présoufflage, et en une phase "E2B" de soufflage, au cours de laquelle le fluide de formage est injecté à la pression "P2B" de soufflage. La phase "E2A" de présoufflage est par exemple déclenchée avant la fin de la première étape "E1" d'étirage tandis que la phase "E2B" de soufflage est déclenchée après la fin de la première étape "E1" d'étirage.

Comme cela est représenté à la figure 3, il arrive dans certaines configurations que le corps 14 malléable de la préforme 10, logé dans le moule 24, soit soumis à une force "F" extérieure de flexion qui tend à faire fléchir le corps en éloignant radialement le fond 16 de l'axe "X1" principal. Le corps 14 est alors susceptible de fléchir à la manière d'une poutre encastré. Ainsi, le col 12, toujours rigide et fermement maintenu en position par la cale 36, est assimilable à la partie encastrée de la poutre, tandis que le fond 16 de la préforme 10 est assimilable à l'extrémité libre de la poutre. Ainsi, lorsque la force "F" extérieure est assez intense, le point 20 d'injection est déplacé radialement par rapport à l'axe "X1" du col 12 de la préforme 10.

La force "F" extérieure peut être formée par la force gravitationnel et/ou par une force centrifuge et/ou par une force en réaction à une accélération rectiligne.

Dans l'exemple représenté à la figure 4, on a représenté un carrousel 44 monté rotatif autour d'un axe "X2" vertical. Plusieurs dispositifs 22 de formage tels que décrits précédemment qui sont embarqués à la périphérie du carrousel 44. Les axes "X1" des préformes 10 sont montés parallèles à l'axe "X2" de rotation du carrousel 44. Le carrousel 44 tourne à une vitesse constante de sorte que les préformes 10 reçues dans les moules 24 de sa périphérie sont soumises à une force centrifuge qui forme ici la force "F" extérieure qui est susceptible de faire fléchir les préformes 10. A la figure 3, la force "F" extérieure est symbolisée par un vecteur appliqué au centre de masse du corps 14 de la préforme 10.

Comme cela a été expliqué en préambule de la présente description, il est préférable que le point 20 d'injection soit aligné avec l'axe "X1" du col 12. Cela garantit que le point 20 d'injection soit aligné avec l'axe de la tige 40 d'étirage. Or ce n'est plus le cas lorsque le corps 14 de la préforme 10 est fléchi ou mal positionné dans le moule à cause de la force centrifuge. Dès lors ce problème engendrera des problèmes de qualité de bouteilles, avec par exemple un décentrage de point d'injection, ou des problèmes de détérioration du récipient, par exemple lorsque la paroi de la préforme 10 entre en contact avec la tige 40 d'étirage avant la fin de son élongation, provoquant un refroidissement local de la paroi entraînant un déchirement de la paroi pendant l'opération de soufflage.

Pour résoudre ce problème, l'invention propose d'ajouter au procédé de formage une étape "E0" de centrage du fond 16 de la préforme 10 qui est déclenchée avant que l'extrémité 42 libre de la tige 40 d'étirage ne soit en contact avec le fond 16 de la préforme. L'étape "E0" de centrage est par exemple déclenchée avant la première étape "E1" d'étirage.

En variante, l'étape "E0" de centrage est déclenchée pendant la première partie de la course de la tige 40 d'étirage, après ou en même temps que le début de la première étape "E1" d'étirage.

Préférentiellement, l'étape "E0" de centrage est déclenchée pendant la première partie de la course de la tige 40 d'étirage, c'est dire, avant que la tige 40 d'étirage ne soit en contact avec le fond de la préforme.

Au cours de l'étape "E0" de centrage, un fluide de formage comprimé à une pression "P0" de rigidification est injecté dans la préforme 10. La pression "P0" de rigidification est sélectionnée de manière à centrer le fond 16 par rapport à l'axe X1 du col 12.

Auparavant, l'homme du métier réalisait le centrage de la préforme dans le moule en s'assurant de la simultanéité des contacts : de l'extrémité de la tige 40 d'étirage avec le fond de la préforme et de la surface du dessus du moule avec la surface sous la collerette. Grâce à ces deux contacts simultanés, l'homme du métier considérait que la préforme était centrée et immobilisée avant la mise en œuvre des différentes étapes du procédé de formage du PET par bi-orientation.

L'homme du métier ne dispose que de la pression de présoufflage et de la pression de soufflage pour former un récipient. La pression de présoufflage a pour fonction de maintenir un espace entre la tige d'étirage et les parois latérales de la préforme. Autrement dit, le présoufflage ne peut coïncider que dans le contexte d'un étirage longitudinal déjà initié par la tige d'étirage.

De plus, l'homme du métier était dissuadé de commander le présoufflage avant le contact de l'extrémité de la tige avec le fond de la préforme parce que la pression de présoufflage aurait commencé à étirer la préforme. Cette déformation étant incontrôlable, le centrage n'est plus garanti. Le principe de formage de récipients par bi-orientation suppose d'avoir mis en place l'étirage mécanique longitudinal par la tige. Puis, l'air de pré soufflage vient s'ajouter à en combinaison pour réaliser l'étirage radial.

L'inventeur s'est rendu compte qu'une pression d'air moindre par rapport à la pression de présoufflage apportait un effet de rigidification à la préforme malléable, sans pour autant commencer à l'étirer.

Ainsi contrairement à un principe basique de formage de récipients par bi-orientation, l'inventeur a commencé à introduire dans la préforme une pression d'air avant le contact de l'extrémité de la tige avec le fond de la préforme, mais il l'a fait avec une pression bien plus faible que la pression de présoufflage. L'effet de rigidification (sans étirage) obtenu est particulièrement surprenant car il centre la préforme dont le contact entre la collerette et le moule était imparfait.

Contrairement au préjugé vaincu que pouvait avoir l'homme du métier, l'étape "E0" de centrage comprend une étape d'introduire de fluide comprimé à une pression "P0" de rigidification avant que l'extrémité de la tige 40 d'étirage ne touche le fond de la préforme. L'effet décrit précédemment est surprenant car il permet d'assurer le centrage de la préforme par rapport au moule, c'est-à-dire de confondre l'axe X1 du col de la préforme avec la tige 40 d'étirage alors que la préforme n'est pas maintenue par les contacts simultanés décrient précédemment.

La pression "P0" de rigidification est maintenue au moins jusqu'à ce que l'extrémité 42 libre de la tige 40 d'étirage soit en contact avec le fond 16 de la préforme 10. La préforme 10 est alors tenue par la collerette 18 au niveau de la face supérieure du moule et le fond 16 est maintenu centré par contact avec la tige 40 d'étirage.

La pression "P0" de rigidification est suffisante pour induire dans la paroi du corps 14 de la préforme des contraintes de traction. A la manière d'une poutre gonflable, la pression à l'intérieur du corps 14 de la préforme 10 augmente la raideur en flexion du corps 14 dans son ensemble. La pression "P0" permet ainsi de redresser le corps 14 de la préforme 10 et de maintenir le fond 16, et donc le point 20 d'injection, sensiblement centré axialement par rapport à l'axe "X1" de la préforme 10 malgré l'application de la force "F" extérieure. Cet effet peut facilement être constaté en injectant dans un ballon baudruche de l'air à une pression trop faible pour le déformer élastiquement mais qui est suffisante pour faire passer le ballon d'un état flasque à un état redressé dans lequel le ballon est suffisamment rigide en flexion pour défier la gravité.

La pression "P0" est cependant choisi assez faible pour ne pas provoquer la formation d'une bulle dans la préforme 10. En effet, la préforme 10 chauffée à sa température de transition vitreuse présente un comportement viscoélastique. Il est connu de l'homme du métier que l'application d'une pression trop élevée risque de provoquer la formation d'une bulle dans le corps de la préforme dont l'expansion incontrôlée aboutie à l'excentration aléatoire du fond 16 de la préforme 12.

La pression "P0" de rigidification peut être trouvée facilement de manière expérimentale par des tests de routine par exemple en fonction des propriétés du matériau thermoplastique utilisé et/ou en fonction de l'épaisseur de la paroi. Les forces extérieures susceptibles d'être appliquées au corps 14 de la préforme 10 étant relativement faibles, la pression "P0" de rigidification peut être très faible tout en étant supérieure à la pression ambiante. Par exemple, pour une préforme réalisée en PET (polyéthylène téréphtalate), la pression "P0" de rigidification est inférieure à 1 bar, plus particulièrement la pression "P0" de rigidification est comprise entre 1,01 bar et 2 bar. De préférence la pression de rigidification est comprise entre 1,05 bar et 1,5 bar.

Le procédé de formage réalisé selon les enseignements de l'invention peut être réalisé de plusieurs manières. On expose par la suite quelques exemples non limitatifs de dispositifs 22 de formage, non revendiqués en tant que tels, similaires à ceux décrits en référence aux figures 2 et 3, et adaptés pour réaliser le procédé selon l'invention .

On a représenté à la figure 6 un premier mode de réalisation du dispositif 22 de formage, non revendiqué, et destiné à mettre en œuvre le procédé réalisé selon les enseignements de l'invention, équipé d'un moule 24 destiné à recevoir une préforme 10, d'une tuyère 32 destinée à être raccordée de manière étanche au col 12 de la préforme 10 logée dans le moule 24. Une tige 40 d'étirage est montée coulissante dans la tuyère 32.

Le dispositif 22 de formage comporte une première source 46 de fluide de formage comprimé à la pression "P2B" de soufflage qui alimente la tuyère 32 de soufflage, une deuxième source 47 de fluide de formage comprimé à la pression "P2A" de présoufflage et une troisième source 49 de fluide de formage comprimée à la pression "P0" de rigidification. Chaque source 46, 47, 49 de fluide de formage est par exemple réalisée par l'agencement d'un détendeur (non représenté) associé à une source commune (non représentée) de fluide comprimé à une pression au moins égale à la pression "P2B" de soufflage, chaque détendeur étant conçu pour détendre le fluide de formage à la pression déterminée pour chacune des trois source 46, 47, 49 de fluide de formage.

Le dispositif 22 de formage comporte ici trois vannes 48, 50, 52 qui sont chacune associées à l'une des trois sources 46, 47, 49 et qui commandent chacune le passage du fluide de formage depuis la source 46, 47, 49 associée, en amont, vers la tuyère 32, en aval.

La première vanne 48 de soufflage est destinée à commander l'injection de fluide de formage à la pression "P2B" de soufflage. La première vanne 48 de soufflage est ainsi interposée entre la première source 46 de fluide de formage et la tuyère 32.

La deuxième vanne 50 de présoufflage est destinée à commander l'injection du fluide de formage à la pression "P2A" de présoufflage. La deuxième vanne 50 de présoufflage est ainsi interposée entre la deuxième source 47 de fluide de formage et la tuyère 32.

Enfin, la troisième vanne 52 de rigidification est destinée à commander l'injection de fluide de formage à la pression "P0" de rigidification dans la tuyère 32. La troisième vanne 52 de rigidification est ainsi interposée entre la troisième source 49 de fluide de formage et la tuyère 32.

De manière connue ces trois vannes 48, 50 et 52 sont commandées automatiquement, par exemple par une unité électronique de commande (non représentée). La pression du fluide de formage à la source 46 est généralement supérieure à la pression "P2B" de soufflage qui est elle-même supérieure à la pression "P2A" de présoufflage. Enfin, comme expliqué précédemment, la pression "P0" de rigidification est encore inférieure à la pression "P2A" de présoufflage.

En variante non représentée de l'invention, également non revendiquée en tant que telle, les vannes 48, 50, 52 sont raccordées directement et en parallèle à la source commune de fluide de formage et elles sont chacune munies de moyens pour réduire la pression du fluide de formage à la pression requise. Notamment, la vanne 52 commandée de rigidification comporte des moyens pour réduire la pression du fluide de formage distribué par la source 46 jusqu'à la pression "P0" de rigidification dans la tuyère 32. De tels moyens de réduction de la pression sont bien connus et ne seront pas détaillés par la suite.

Le fait de disposer d'une vanne 48, 50, 52 associé à chaque étape et/ou phase du procédé permet avantageusement de réduire le temps de réponse du dispositif 22 de formage.

On a représenté à la figure 7 un deuxième mode de réalisation du dispositif 22 de formage, non revendiqué, destiné à mettre en œuvre le procédé réalisé selon les enseignements de l'invention. Ce deuxième mode de réalisation présente de nombreux points communs avec le premier mode de réalisation. Seules les différences seront détaillées par la suite.

Dans ce deuxième mode de réalisation, le dispositif 22 de formage comporte une deuxième source 54 de fluide de formage comprimé à une pression au moins égale à la pression "P2A" de présoufflage et supérieure à la pression "P0" de rigidification.

La vanne 52 commandée de rigidification est raccordée entre la deuxième source 54 de fluide de formage et la tuyère 32 pour alimenter la tuyère 32 avec le fluide de formage à la pression "P0" de rigidification.

La deuxième source 54 de fluide de formage distribuant du fluide de formage à une pression supérieure à la pression "P0" de rigidification, des moyens (non représentés) de réduction de la pression du fluide de formage jusqu'à la pression "P0" requise de rigidification sont agencés entre la deuxième source 54 de fluide de formage et la vanne 52 de rigidification.

En variante non représentée, également non revendiquée en tant que telle, les moyens de réduction de la pression sont intégrés à la vanne de rigidification.

La vanne 50 de présoufflage est aussi agencée entre la deuxième source 54 de fluide de formage et la tuyère 32, en parallèle à la vanne 52 de rigidification. La deuxième source 54 de fluide de formage distribue avantageusement le fluide de formage à la pression de présoufflage de manière qu'il n'est pas nécessaire d'agencer des moyens de réduction de pression entre la deuxième source 54 de fluide de formage et la vanne 50 de présoufflage.

En variante non représentée de l'invention, également non revendiquée en tant que telle, la deuxième source de fluide de formage délivre du fluide de formage à une pression supérieure à la pression "P2A" de présoufflage. Dans ce cas, des moyens de réduction de pression sont agencés entre la deuxième source 54 de fluide de formage et la vanne 50 de présoufflage. Les moyens de réduction de pression peuvent aussi être intégrés à la vanne de présoufflage.

Comme dans le premier mode de réalisation, la vanne 48 de soufflage est ici alimentée en fluide de formage par une première source 46 de fluide de formage distincte de la deuxième source 54 de fluide de formage.

On a représenté à la figure 8 un troisième mode de réalisation du dispositif 22 de formage, non revendiqué, destiné à mettre en œuvre le procédé réalisé selon les enseignements de l'invention. Dans ce troisième mode de réalisation, le dispositif 22 de formage comporte une unique source 46 de fluide de formage à une pression supérieure ou égale à la pression "P2B" de soufflage.

Le dispositif 22 de formage comporte ici une unique vanne 56 de commande qui comporte des moyens de régulation commandés de la pression de fluide de formage. Les moyens de régulation sont commandés pour délivrer le fluide de formage dans la tuyère à une pression variant au moins entre la pression "P0" de rigidification et la pression "P2B" de soufflage en fonction de l'étape du procédé à laquelle se trouve la préforme 10. De tels moyens de régulation sont bien connus et ne seront pas décrits plus en détails par la suite.

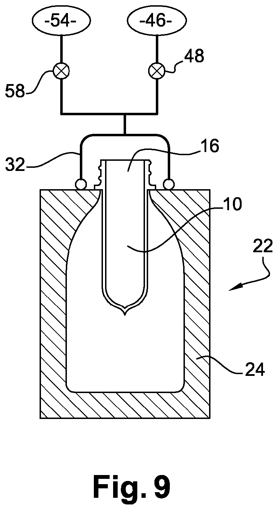

On a représenté un quatrième mode de réalisation du dispositif 22 de formage à la figure 9, ce mode de réalisation du dispositif étant destiné à mettre en œuvre le procédé réalisé selon les enseignements de l'invention mais non revendiqué. Ce quatrième mode de réalisation est très similaire au deuxième mode de réalisation représenté à la figure 7. Cependant, la vanne 50 de présoufflage et la vanne 52 de rigidification sont remplacées par une unique vanne 58 de commande qui comporte des moyens de régulation commandés de la pression de fluide de formage. Les moyens de régulation sont commandés pour délivrer le fluide de formage dans la tuyère à une pression variant entre la pression "P0" de rigidification et la pression "P2A" de présoufflage en fonction de l'étape du procédé à laquelle se trouve la préforme 10. De tels moyens de régulation sont bien connus et ne seront pas décrits plus en détails par la suite.

En variante non représentée de l'invention, également non revendiquée en tant que telle, le coulissement de la tige d'étirage est commandé en fonction de la pression de fluide de formage contenu dans la préforme.

Le procédé réalisé selon les enseignements de l'invention permet avantageusement d'aligner le point 20 d'injection d'une préforme 10 avec l'axe "X1" du col 12 de manière simple et peu onéreuse en injectant du fluide de formage à très faible pression avant que la tige 40 d'étirage n'entre en contact avec le fond 16 de la préforme 10. Le procédé permet d'aligner le point 20 d'injection avec l'axe "X1" du col 12, indépendamment de la masse ou de la forme de la préforme. Le procédé permet aussi d'aligner le point 20 d'injection avec l'axe "X1" du col 12 indépendamment de l'intensité de la vitesse de rotation du carrousel, quelle que soit l'orientation de l'axe "X1" du col 12 par rapport à l'axe "X2" de rotation du carrousel 44.

## Revendications

1. Procédé de formage d'un récipient par étirage-soufflage d'une préforme (10), la préforme (10) axisymétrique présentant un corps (14) tubulaire ouvert vers le haut par un col (12) d'axe (X1) vertical et fermé vers le bas par un fond (16), le corps (14) de la préforme (10) étant préalablement rendu malléable par chauffage, le procédé comportant :
- une étape (E1) d'étirage au cours de laquelle une extrémité (42) libre d'une tige (40) d'étirage est insérée coaxialement dans le corps (14) de la préforme (10) par son col (12) jusqu'au fond (16) de la préforme (10) pour étirer axialement le corps (14) de la préforme (10) ;
- une étape (E2) de formage au cours de laquelle un fluide de soufflage comprimé est injecté à une pression (P2) de formage dans la préforme (10) ;
**caractérisé en ce qu'**il comporte une étape (E0) de centrage du fond (16) de la préforme qui est déclenchée avant que l'extrémité (42) libre de la tige (40) d'étirage ne soit en contact avec le fond (16) de la préforme (10) et au cours de laquelle un fluide de formage comprimé à une pression (P0) de rigidification, est injecté dans la préforme (10) pour centrer le fond (16) de la préforme (10) par rapport à l'axe "X1" du col (12), la pression (P0) de rigidification étant maintenue au moins jusqu'à ce que l'extrémité (42) libre de la tige (40) d'étirage soit en contact avec le fond (16) de la préforme (10).

2. Procédé selon la revendication précédente, **caractérisé en ce que** la pression (P0) de rigidification est comprise entre 1,01 bar et 2 bar, de préférence entre 1,05 bar et 1,5 bar.

3. Procédé selon l'une quelconque des revendications précédentes, **caractérisé en ce qu'**au cours du procédé de formage, le col (12) de la préforme (10) est maintenu fixe par rapport à une face (28) d'appui.

4. Procédé selon l'une quelconque des revendications précédentes, **caractérisé en ce que** la préforme (10) est soumise à une force (F) extérieure de flexion qui tend à faire fléchir le corps en éloignant radialement le fond (16) de l'axe (X1) du col (12), la pression (P0) de rigidification augmentant la raideur en flexion du corps (14) de la préforme (10) afin que le fond (16) reste sensiblement centré axialement par rapport à l'axe (X1) du col (12).

5. Procédé selon la revendication précédente, **caractérisé en ce que** la préforme est insérée dans un moule (24) qui est monté en périphérie d'un carrousel (44) tournant autour d'un axe (X2), la force (F) de flexion étant formé par une force centrifuge qui s'exerce sur le corps (14) de la préforme (10) lors de la rotation du carrousel (44).

6. Procédé selon la revendication précédente, **caractérisé en ce que** la préforme (10) est agencée sur le carrousel (44) de manière que l'axe (X1) de son col (12) soit sensiblement parallèle à l'axe (X2) de rotation du carrousel (44).

7. Procédé selon l'une quelconque des revendications précédentes, **caractérisé en ce qu'**au cours de l'étape (E2) de soufflage la pression (P2) de formage est susceptible de varier entre une pression (P2A) de présoufflage et une pression (P2B) de soufflage supérieure à la pression (P2A) de présoufflage.

## Patentansprüche

1. Verfahren zur Formung eines Behälters durch Streckblasen eines Vorformlings (10), wobei der achsensymmetrische Vorformling (10) einen röhrenförmigen Körper (14) aufweist, der nach oben hin durch einen Hals (12) mit einer vertikalen Achse (X1) offen ist und nach unten hin durch einen Boden (16) geschlossen ist, wobei der Körper (14) des Vorformlings (10) zuvor durch Erhitzen formbar gemacht wird, wobei das Verfahren Folgendes aufweist:
- einen Schritt (E1) des Verstreckens, in dessen Verlauf ein freies Ende (42) einer Reckstange (40) koaxial in den Körper (14) des Vorformlings (10) durch dessen Hals (12) bis zum Boden (16) des Vorformlings (10) eingeführt wird, um den Körper (14) des Vorformlings (10) axial zu verstrecken;
- einen Schritt (E2) des Formens, in dessen Verlauf ein komprimiertes Blasfluid mit einem Formungsdruck (P2) in den Vorformling (10) eingeblasen wird;
**dadurch gekennzeichnet, dass** es einen Schritt (E0) des Zentrierens des Bodens (16) des Vorformlings aufweist, der ausgelöst wird, bevor das freie Ende (42) der Reckstange (40) mit dem Boden (16) des Vorformlings (10) in Kontakt steht, und in dessen Verlauf ein Formungsfluid, das auf einen Versteifungsdruck (P0) komprimiert ist, in den Vorformling (10) eingeblasen wird, um den Boden (16) des Vorformlings (10) bezogen auf die Achse "X1" des Halses (12) zu zentrieren, wobei der Versteifungsdruck (P0) wenigstens beibehalten wird, bis das freie Ende (42) der Reckstange (40) mit dem Boden (16) des Vorformlings (10) in Kontakt steht.

2. Verfahren nach dem vorhergehenden Anspruch, **dadurch gekennzeichnet, dass** der Versteifungsdruck (P0) zwischen 1,01 bar und 2 bar, vorzugsweise zwischen 1,05 bar und 1,5 bar beträgt.

3. Verfahren nach einem der vorhergehenden Ansprüche, **dadurch gekennzeichnet, dass** im Verlauf des Formungsverfahrens der Hals (12) des Vorformlings (10) bezogen auf eine Auflagefläche (28) festgehalten wird.

4. Verfahren nach einem der vorhergehenden Ansprüche, **dadurch gekennzeichnet, dass** der Vorformling (10) einer äußeren Biegekraft (F) ausgesetzt wird, die bestrebt ist, den Körper zu biegen, indem der Boden (16) von der Achse (X1) des Halses (12) radial entfernt wird, wobei der Versteifungsdruck (P0) die Biegesteifigkeit des Körpers (14) des Vorformlings (10) erhöht, damit der Boden (16) bezogen auf die Achse (X1) des Halses (12) im Wesentlichen axial zentriert bleibt.

5. Verfahren nach dem vorhergehenden Anspruch, **dadurch gekennzeichnet, dass** der Vorformling in eine Form (24) eingeführt wird, die am Umfang eines Karussells (44) montiert ist, das sich um eine Achse (X2) dreht, wobei die Biegekraft (F) von einer Fliehkraft gebildet wird, die bei der Drehung des Karussells (44) auf den Körper (14) des Vorformlings (10) wirkt.

6. Verfahren nach dem vorhergehenden Anspruch, **dadurch gekennzeichnet, dass** der Vorformling (10) so auf dem Karussell (44) angeordnet ist, dass die Achse (X1) seines Halses (12) im Wesentlichen parallel zur Drehachse (X2) des Karussells (44) verläuft.

7. Verfahren nach einem der vorhergehenden Ansprüche, **dadurch gekennzeichnet, dass** im Verlauf des Schritts (E2) des Blasens der Formungsdruck (P2) zwischen einem Vorblasdruck (P2A) und einem Blasdruck (P2B), der höher als der Vorblasdruck (P2A) ist, variieren kann.

## Claims

1. Method for forming a container by stretch-blow-moulding of a preform (10), the axisymmetric preform (10) having a tubular body (14) that is open at the top via a neck (12) of vertical axis (X1), and that is closed at the bottom by a base (16), the body (14) of the preform (10) having been previously rendered malleable by heating, the method comprising:
- a stretching step (E1) during which a free end (42) of a stretching rod (40) is inserted coaxially into the body (14) of the preform (10) via its neck (12) as far as the base (16) of the preform (10) in order to axially stretch the body (14) of the preform (10);
- a moulding step (E2) during which a pressurized blowing fluid is injected, at a moulding pressure (P2), into the preform (10);
**characterized in that** it comprises a step (E0) of centring the base (16) of the preform, this step being triggered before the free end (42) of the stretching rod (40) is in contact with the base (16) of the preform (10), and during which a pressurized moulding fluid, at a stiffening pressure (P0), is injected into the preform (10) in order to centre the base (16) of the preform (10) with respect to the axis "X1" of the neck (12), the stiffening pressure (P0) being maintained at least until the free end (42) of the stretching rod (40) is in contact with the base (16) of the preform (10).

2. Method according to the preceding claim, **characterized in that** the stiffening pressure (P0) is between 1.01 bar and 2 bar, preferably between 1.05 bar and 1.5 bar.

3. Method according to either one of the preceding claims, **characterized in that**, during the moulding process, the neck (12) of the preform (10) is held fixed with respect to a contact face (28).

4. Method according to any one of the preceding claims, **characterized in that** the preform (10) experiences an external bending force (F) which tends to cause the body to bend, moving the base (16) radially away from the axis (X1) of the neck (12), with the stiffening pressure (P0) increasing the bending stiffness of the body (14) of the preform (10) in order that the base (16) remains axially substantially centred relative to the axis (X1) of the neck (12).

5. Method according to the preceding claim, **characterized in that** the preform is inserted into a mould (24) which is mounted on the periphery of a carousel (44) rotating about an axis (X2), the bending force (F) consisting of a centrifugal force which acts on the body (14) of the preform (10) as the carousel (44) rotates.

6. Method according to the preceding claim, **characterized in that** the preform (10) is arranged on the carousel (44) so that the axis (X1) of its neck (12) is substantially parallel to the axis of rotation (X2) of the carousel (44).

7. Method according to any one of the preceding claims, **characterized in that**, during the blow-moulding step (E2), the forming pressure (P2) is able to vary between a pre-blow-moulding pressure (P2A) and a blow-moulding pressure (P2B) that is greater than the pre-blow-moulding pressure (P2A).
